# EUROPEAN PATENT SPECIFICATION

(11) **EP 4 425 670 B1**
(45) Date of publication and mention of the grant of the patent: **14.01.2026**
(21) Application number: 23892767.7
(22) Date of filing: 11.08.2023
(51) Int. Cl.: H01M 50/258, H01M 50/213

(54) **BATTERY PACK**
BATTERIEPACK
BLOC-BATTERIE

(30) Priority: 23.12.2022 KR 20220183776; 16.06.2023 KR 20230077598
(43) Date of publication of application: 04.09.2024
(73) Proprietor: LG Energy Solution, Ltd., Seoul 07335 (KR)
(72) Inventor: PARK, Sung-Kyu, Daejeon 34122 (KR) (KR)
(74) Representative: Plasseraud IP
(86) International application number: PCT/KR2023/011986
(87) International publication number: WO 2024/135984

(56) References cited:
- WO-A1-2022/237406
- JP-A- 2019 212 395
- JP-B2- 7 016 318
- KR-A- 20190 000 210
- KR-A- 20210 136 255
- KR-A- 20220 085 396
- KR-A- 20220 125 624
- US-A1- 2011 165 451
- US-A1- 2021 050 568

## Description

### TECHNICAL FIELD

The present disclosure relates to a battery pack.

The present application claims priority to Korean Patent Application No. 10-2022-0183776 filed on December 23, 2022 and Korean Patent Application No. 10-2023-0077598 filed on June 16, 2023 in the Republic of Korea.

### BACKGROUND ART

With a rapid increase in demand for portable electronic products such as laptop computers, video cameras, mobile phones and so on and the widespread use of robots, electric vehicles and so on, many studies are being made on high performance secondary batteries that can be recharged repeated.

Currently, commercially available secondary batteries include nickel-cadmium batteries, nickel-hydrogen batteries, nickel-zinc batteries, lithium secondary batteries and so on, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

Generally, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries are being widely used as an energy source or energy storage in not only small devices such as portable electronic devices but also medium and large devices such as electric vehicles or Energy Storage Systems (ESS). A plurality of secondary batteries may be electrically connected and received together in a module case to form a battery module. Additionally, a plurality of battery modules may be connected to form a battery pack.

In many cases, the battery pack may be installed at a space of limited size. For example, when the battery pack is installed in a vehicle, the space limitation in the up-down direction may be great. Accordingly, it is necessary to attempt to increase energy density in the up-down direction by placing a fastening structure using the left-right direction or in the front-rear direction of the battery pack.

Document US 2011/165451 discusses a battery pack formed by vertically or laterally stacking battery modules each including a plurality of secondary batteries.

### SUMMARY

### Technical Problem

The present disclosure is designed to solve these and other problems.

The present disclosure is directed to providing a battery pack with improved energy density in the up-down direction.

The present disclosure is further directed to providing a battery pack including a structure for securing a stack of battery modules in the left-right direction or in the front-rear direction.

The present disclosure is further directed to providing a battery pack with improved space efficiency.

### Technical Solution

To achieve the above-described objective, a battery pack according to an embodiment of the present disclosure includes a first battery module including a plurality of battery cells; a first side bracket disposed on a side plate of the first battery module; a second battery module stacked on the first battery module, and including a plurality of battery cells; a second side bracket disposed on a side plate of the second battery module; and a mounting bracket fastened to the first side bracket and the second side bracket.

Additionally, each of the first battery module and the second battery module may include a plurality of cylindrical battery cells extending in an up-down direction.

Additionally, the first side bracket may be attached to the side plate of the first battery module.

Additionally, the first side bracket has a nut that is secured to an inner surface.

Additionally, the side plate of the first battery module has a receiving portion in which the nut is received.

Additionally, the battery pack may further include a first fastening member that is fastened to the nut through the mounting bracket.

Additionally, the battery pack may further include a middle bracket between the first battery module and the second battery module to cover the second side bracket; and a second fastening member passing through the middle bracket and the mounting bracket.

Additionally, the battery pack may further include a bottom bracket covering a lower surface of the first battery module and the first side bracket; and a third fastening member passing through the bottom bracket and the mounting bracket.

Additionally, the battery pack may further include a top bracket covering an upper surface of the second battery module, and the mounting bracket may be fastened to the top bracket.

Additionally, the battery pack may further include a front bracket covering ae front surface of the first battery module and a front surface of the second battery module, and the mounting bracket may be fastened to the front bracket.

To achieve the above-described objective, a vehicle according to an embodiment of the present disclosure includes the battery pack according to the present disclosure.

### Advantageous Effects

According to at least one of the embodiments of the present disclosure, it may be possible to provide the battery pack with improved energy density in the up-down direction.

According to at least one of the embodiments of the present disclosure, it may be possible to provide the battery pack including the structure for securing the stack of battery modules in the left-right direction or in the front-rear direction.

According to at least one of the embodiments of the present disclosure, it may be possible to provide the battery pack with improved space efficiency.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram showing a battery pack according to an embodiment of the present disclosure.
FIG. 2 is a partial exploded view of the battery pack of FIG. 1.
FIG. 3 is a partial exploded view of a battery module in a battery pack according to an embodiment of the present disclosure.
FIG. 4 is a diagram showing a stack of battery modules in a battery pack according to an embodiment of the present disclosure.
FIG. 5 is an exploded view of a plurality of battery modules, a top bracket and a bottom bracket in a battery pack according to an embodiment of the present disclosure.
FIG. 6 is an exploded view of a plurality of battery modules, a mounting bracket and a reinforcement bracket in a battery pack according to an embodiment of the present disclosure.
FIG. 7 is an exploded view of a fastening member that fastens a plurality of battery modules, a mounting bracket and a reinforcement bracket in a battery pack according to an embodiment of the present disclosure.
FIG. 8 is an exploded view of a plurality of battery modules, a front bracket and a rear bracket in a battery pack according to an embodiment of the present disclosure.
FIG. 9 is a cross-sectional view of FIG. 1, taken along the line A-A'.
FIG. 10 is an enlarged view of section F in FIG. 9.
FIG. 11 is a cross-sectional view of FIG. 1, taken along the line B-B'.
FIG. 12 is an enlarged view of section G in FIG. 11.
FIG. 13 is an enlarged view of section H in FIG. 11.
FIG. 14 is an enlarged view of section C in FIG. 1.
FIG. 15 is an enlarged view of section D in FIG. 1.
FIG. 16 is an enlarged view of section E in FIG. 1.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

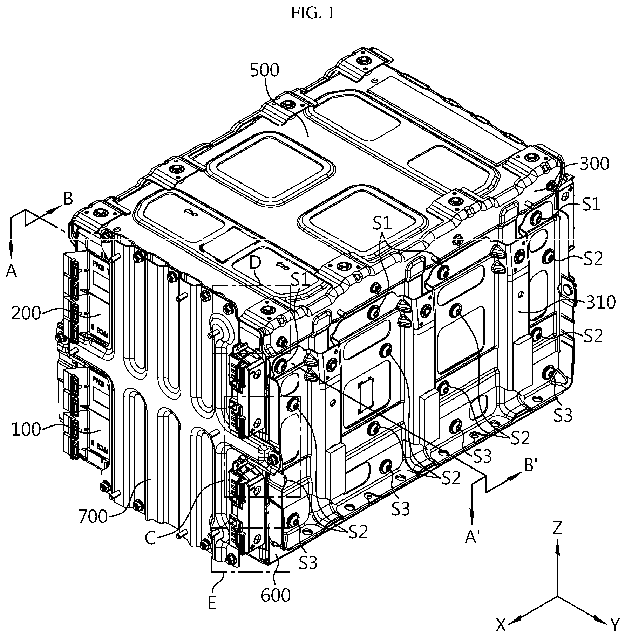

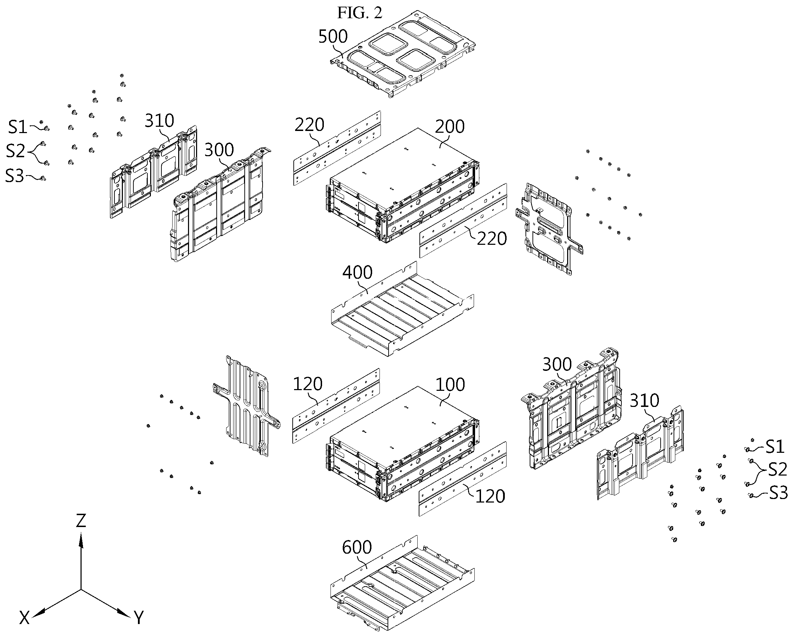

FIG. 1 is a diagram showing a battery pack according to an embodiment of the present disclosure. FIG. 2 is a partial exploded view of the battery pack of FIG. 1. Referring to FIGS. 1 and 2, the battery pack according to an embodiment of the present disclosure may include a first battery module 100, a first side bracket 120, a second battery module 200, a second side bracket 220 and a mounting bracket 300.

The first battery module 100 may include a plurality of battery cells 10. In this instance, the battery cell 10 may refer to a secondary battery. Additionally, the battery cell 10 may refer to a cylindrical battery cell 10. The first battery module 100 may include a module case. The module case may have a rectangular prism shape. The module case may include a plurality of plates. The module case may have an internal space. The plurality of battery cells 10 may be located in the module case.

The first side bracket 120 may be disposed on a side plate 110 of the first battery module 100. The first side bracket 120 may be in the shape of a rectangular plate. The first side bracket 120 may cover the side plate 110 of the first battery module 100. The first side bracket 120 may include a pair of first side brackets 120. The pair of first side brackets 120 may be respectively disposed on the pair of side plates 110 of the first battery module 100.

The second battery module 200 may include a plurality of battery cells 10. In this instance, the battery cell 10 may refer to a secondary battery. Additionally, the battery cell 10 may refer to a cylindrical battery cell 10. The second battery module 200 may include a module case. The module case may have a rectangular prism shape. The module case may include a plurality of plates. The module case may have an internal space. The plurality of battery cells 10 may be located in the module case.

The second battery module 200 may be stacked on the first battery module 100. For example, a bottom plate of the second battery module 200 may be located on a top plate of the first battery module 100.

The second side bracket 220 may be disposed on a side plate 210 of the second battery module 200. The second side bracket 220 may be in the shape of a rectangular plate. The second side bracket 220 may cover the side plate 210 of the second battery module 200. The second side bracket 220 may include a pair of second side brackets 220. The pair of second side brackets 220 may be respectively disposed on the pair of side plates 210 of the second battery module 200.

The mounting bracket 300 may be fastened to the first side bracket 120 and the second side bracket 220. The mounting bracket 300 may be in the shape of a rectangular plate. The mounting bracket 300 may cover the first side bracket 120 and the second side bracket 220. The mounting bracket 300 may include a pair of mounting brackets 300. The pair of mounting brackets 300 may be fastened to the first side bracket 120 and the second side bracket 220, respectively.

When the plurality of battery modules are stacked in the up-down direction or Z axis direction, a structure for securing or fastening the plurality of battery modules is necessary. However, due to the limited space in which the battery pack is installed, it may be difficult to place the securing or fastening structure in the up-down direction or Z axis direction.

According to the above-described configuration of the present disclosure, the structure for fastening or securing the first battery module 100 and the second battery module 200 may be located in the lateral direction or Y axis direction. Accordingly, it may be possible to remove or simplify the securing structure in the up-down direction or Z axis direction. Accordingly, it may be possible to improve energy density of the battery pack in the up-down direction or Z axis direction.

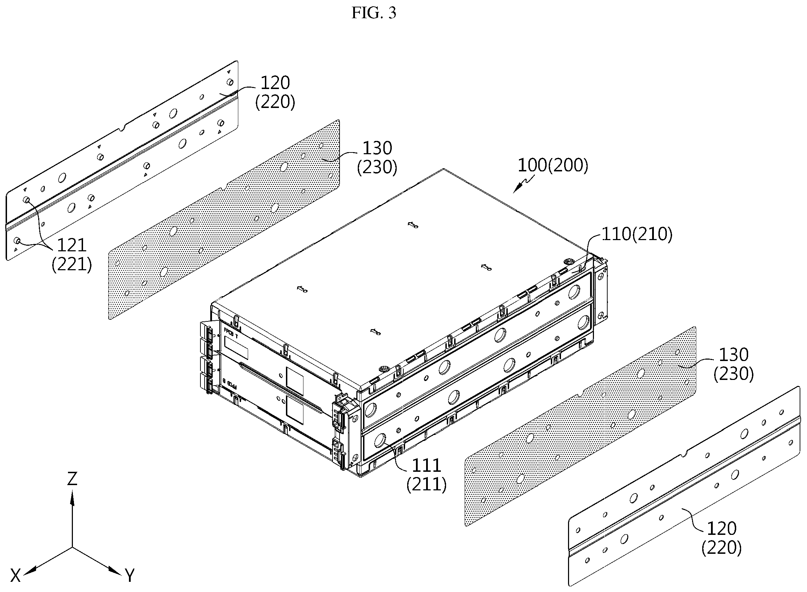

FIG. 3 is a partial exploded view of the battery module in the battery pack according to an embodiment of the present disclosure. Referring to FIG. 3, the first side bracket 120 of the battery pack according to an embodiment of the present disclosure may be attached to the side plate 110 of the first battery module 100. An adhesion member 130 may be disposed between the first side bracket 120 and the side plate 110. The adhesion member 130 may fully cover the first side bracket 120 or the side plate 110.

Additionally, the second side bracket 220 of the battery pack according to an embodiment of the present disclosure may be attached to the side plate 210 of the second battery module 200. An adhesion member 230 may be disposed between the second side bracket 220 and the side plate 210. The adhesion member 230 may fully cover the second side bracket 220 or the side plate 210.

According to the above-described configuration of the present disclosure, the first side bracket 120 may be coupled to the side plate 110. Since the adhesion member 130 is disposed over the wide area, it may be possible to increase the coupling strength of the first side bracket 120 and the side plate 110.

Referring to FIG. 3, the first side bracket 120 of the battery pack according to an embodiment of the present disclosure may include a nut 121 that is secured to the inner surface. The nut 121 may be coupled or secured to the first side bracket 120 via welding. In this instance, the nut 121 may be referred to as the weld nut 121. The nut 121 may include a plurality of nuts 121. The nuts 121 may be arranged in the front-rear direction or X axis direction.

Additionally, the second side bracket 220 of the battery pack according to an embodiment of the present disclosure may include a nut 221 that is secured to the inner surface. The nut 221 may be coupled or secured to the second side bracket 220 via welding. In this instance, the nut 221 may be referred to as the weld nut 221. The nut 221 may include a plurality of nuts 221. The nuts 221 may be arranged in the front-rear direction or X axis direction.

According to the above-described configuration of the present disclosure, since the nut 121 is coupled to the first side bracket 120 without any coupling structure or securing structure, it may be possible to simplify the structure of the battery pack and increase energy density of the battery pack.

Referring to FIG. 3, the side plate 110 of the first battery module 100 of the battery pack according to an embodiment of the present disclosure may have a receiving portion 111 in which the nut 121 is received. The receiving portion 111 may be formed in the side plate 110 of the first battery module 100. The receiving portion 111 may be a hole 111 formed in the side plate 110 of the first battery module 100. The receiving portion 111 may include a plurality of receiving portions 111. Additionally, the number of receiving portions 111 may correspond to the number of nuts 121 in a one-to-one relationship. The receiving portion 111 may be configured to receive the nut 121 and a fastening member that is fastened to the nut 121.

Additionally, the side plate 210 of the second battery module 200 of the battery pack according to an embodiment of the present disclosure may have a receiving portion 211 in which the nut 221 is received. The receiving portion 211 may be formed in the side plate 210 of the second battery module 200. The receiving portion 211 may be a hole 211 formed in the side plate 210 of the second battery module 200. The receiving portion 211 may include a plurality of receiving portions 211. Additionally, the number of receiving portions 211 may correspond to the number of nuts 221 in a one-to-one relationship. The receiving portion 211 may be configured to receive the nut 221 and a fastening member that is fastened to the nut 221.

According to the above-described configuration of the present disclosure, since the nuts 121, 221 and the fastening members for the coupling of the side plates 110, 210 and the side brackets 120, 220 are received in the battery modules 100, 200, it may be possible to simplify the structure of the battery pack and increase energy density of the battery pack.

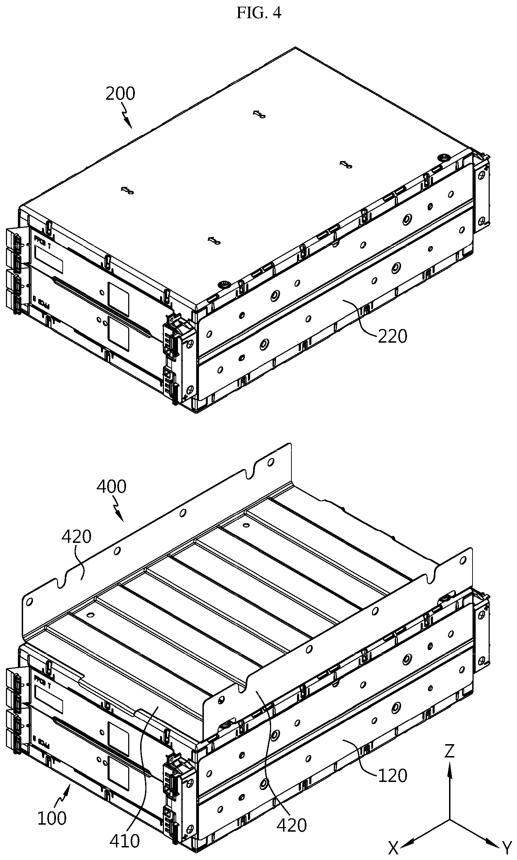

FIG. 4 is a diagram showing the stack of battery modules 100, 200 in the battery pack according to an embodiment of the present disclosure. Referring to FIG. 4, the battery pack according to an embodiment of the present disclosure may include a middle bracket 400. The middle bracket 400 may include a base plate 410 and a side plate 420. The base plate 410 may have a rectangular plate shape. The side plate 420 may extend in the upward direction or Z axis direction from the base plate 410. The side plate 420 may have a rectangular plate shape, and include a pair of side plates 420. The base plate 410 may be disposed between the first battery module 100 and the second battery module 200. The pair of side plates 420 may cover the second side bracket 220.

According to the above-described configuration of the present disclosure, the middle bracket 400 may enhance the strength of the stack structure of the battery modules 100, 200. The middle bracket 400 may stably fix the location of the second battery module 200.

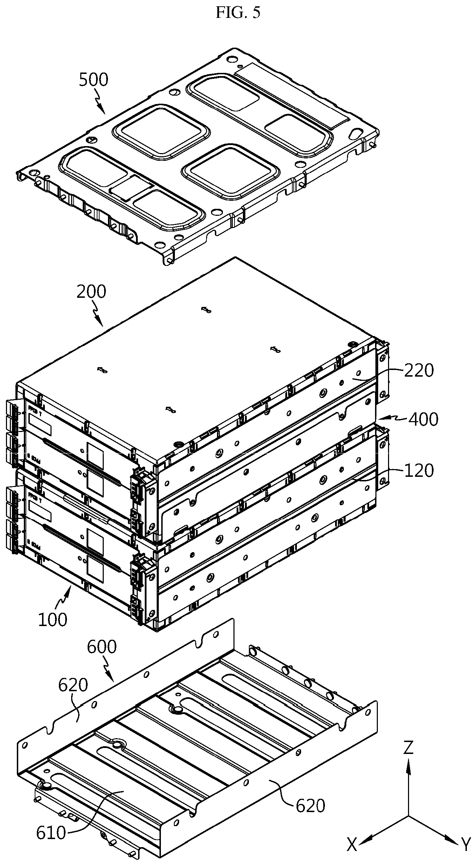

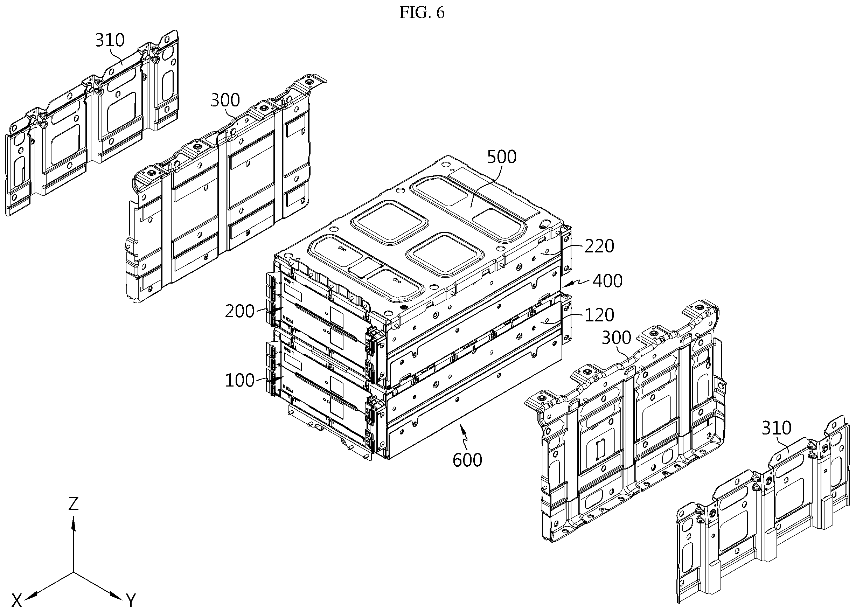

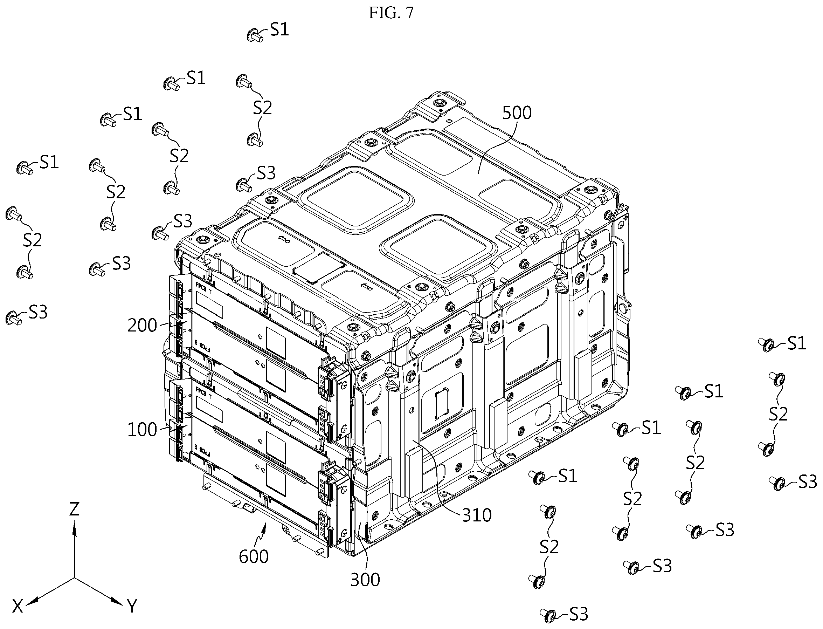

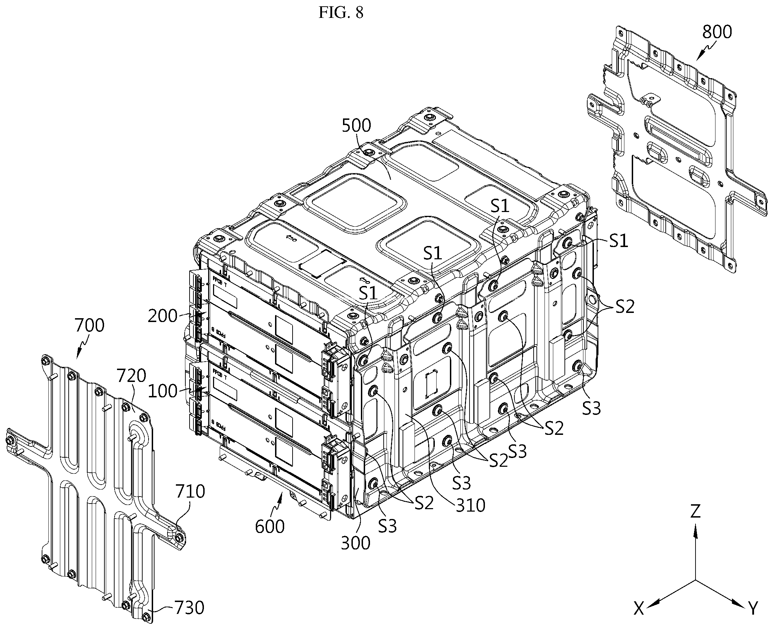

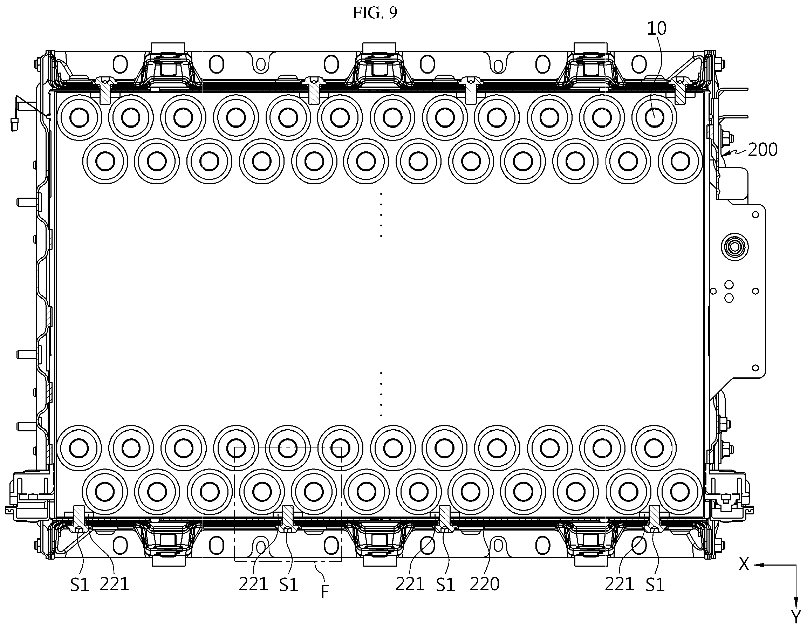

FIG. 5 is an exploded view of the plurality of battery modules 100, 200, a top bracket 500 and a bottom bracket 600 in the battery pack according to an embodiment of the present disclosure. FIG. 6 is an exploded view of the plurality of battery modules 100, 200, the mounting bracket 300 and a reinforcement bracket 310 in the battery pack according to an embodiment of the present disclosure. FIG. 7 is an exploded view of the fastening member that fastens the plurality of battery modules 100, 200, the mounting bracket 300 and the reinforcement bracket 310 in the battery pack according to an embodiment of the present disclosure. FIG. 8 is an exploded view of the plurality of battery modules 100, 200, a front bracket 700 and a rear bracket 800 in the battery pack according to an embodiment of the present disclosure. FIG. 9 is a cross-sectional view of FIG. 1, taken along the line A-A'. Referring to FIGS. 5 to 9, the battery pack according to an embodiment of the present disclosure may further include the top bracket 500 covering the upper surface of the second battery module 200, and the mounting bracket 300 may be fastened to the top bracket 500. The top bracket 500 may cover the upper surface of the second battery module 200 and at least a portion of the side plate 210 of the second battery module 200. Alternatively, the top bracket 500 may cover the upper surface of the second battery module 200 and at least a portion of the second side bracket 220.

According to the above-described configuration of the present disclosure, since the top bracket 500 and the mounting bracket 300 are fastened together, it may be possible to stably support and secure the stack structure of the first battery module 100 and the second battery module 200.

Referring to FIGS. 5 to 9, the battery pack according to an embodiment of the present disclosure may further include the bottom bracket 600 covering the lower surface of the first battery module 100 and the first side bracket 120 and a third fastening member S3 passing through the bottom bracket 600 and the mounting bracket 300.

The mounting bracket 300 may be fastened to the bottom bracket 600. The bottom bracket 600 may cover the lower surface of the first battery module 100 and at least a portion of the side plate 110 of the first battery module 100. Alternatively, the bottom bracket 600 may cover the lower surface of the first battery module 100 and at least a portion of the first side bracket 120. The bottom bracket 600 may include a base plate 610 and a side plate 620. The base plate 610 may be located between the first battery module 100 and the second battery module 200. The side plate 620 may cover the side plate 110 of the first battery module 100 or the first side bracket 120.

According to the above-described configuration of the present disclosure, since the bottom bracket 600 and the mounting bracket 300 are fastened together, it may be possible to stably support and secure the stack structure of the first battery module 100 and the second battery module 200.

Referring to FIGS. 5 to 9, the battery pack according to an embodiment of the present disclosure may further include a first fastening member S1 that is fastened to the nut 121 through the mounting bracket 300. The first fastening member S1 may include a plurality of first fastening members S1. The plurality of first fastening members S1 may be arranged in the front-rear direction or X axis direction. Each of the plurality of first fastening members S1 may pass through the mounting bracket 300 and the second side bracket 220. Each of the plurality of first fastening members S1 may be coupled to the nut 121. Additionally, at least a portion of each of the plurality of first fastening members S1 may be inserted into the side plate 210 of the second battery module 200. The plurality of first fastening members S1 may fasten, couple or secure the mounting bracket 300 and the second side bracket 220.

According to the above-described configuration of the present disclosure, the second battery module 200 may be coupled, fastened or secured to the mounting bracket 300 in the left-right direction or Y axis direction. Accordingly, it may be possible to improve energy density and space efficiency of the battery pack in the up-down direction or Z axis direction.

Referring to FIGS. 5 to 9, the battery pack according to an embodiment of the present disclosure may further include a second fastening member S2 passing through the middle bracket 400 and the mounting bracket 300.

The second fastening member S2 may include a plurality of second fastening members S2. The plurality of second fastening members S2 may be arranged in the front-rear direction or X axis direction. At least a portion of each of the plurality of second fastening members S2 may pass through the mounting bracket 300 and the second side bracket 220. Additionally, at least a portion of each of the plurality of second fastening members S2 may pass through the mounting bracket 300 and the first side bracket 120. The plurality of second fastening members S2 may be coupled to the nuts 121, 221. Additionally, at least a portion of each of the plurality of second fastening members S2 may be inserted into the side plate 210 of the second battery module 200. Additionally, at least a portion of each of the plurality of second fastening members S2 may be inserted into the side plate 110 of the first battery module 100.

At least a portion of the plurality of second fastening members S2 may fasten, couple or secure the mounting bracket 300 and the second side bracket 220. Additionally, at least a portion of the plurality of second fastening member S2 may fasten, couple or secure the mounting bracket 300 and the first side bracket 120.

Additionally, at least a portion of the plurality of second fastening members S2 may pass through the middle bracket 400, the mounting bracket 300 and the second side bracket 220. At least a portion of the plurality of second fastening members S2 may fasten, couple or secure the middle bracket 400, the mounting bracket 300 and the second side bracket 220.

According to the above-described configuration of the present disclosure, the first battery module 100 and the second battery module 200 may be coupled, fastened or secured to the mounting bracket 300 in the left-right direction or Y axis direction. Accordingly, it may be possible to improve energy density and space efficiency of the battery pack in the up-down direction or Z axis direction.

Referring to FIGS. 5 to 9, the battery pack according to an embodiment of the present disclosure may further include the reinforcement bracket 310 on the outer side of the mounting bracket 300.

The reinforcement bracket 310 may be fastened to the mounting bracket 300. The reinforcement bracket 310 may be in the shape of a rectangular plate. The reinforcement bracket 310 may cover the mounting bracket 300. The reinforcement bracket 310 may include a pair of reinforcement brackets 310. Each of the pair of reinforcement brackets 310 may be fastened to the mounting bracket 300.

According to the above-described configuration of the present disclosure, the reinforcement bracket 310 may support the mounting bracket 300. Accordingly, it may be possible to stably maintain the stack structure of the battery pack.

Referring to FIGS. 5 to 9, the battery pack according to an embodiment of the present disclosure may include the second fastening member S2 passing through the mounting bracket 300 and the reinforcement bracket 310.

At least a portion of the plurality of second fastening members S2 may be fastened to the nut 121 of the first side bracket 120 through the mounting bracket 300 and the reinforcement bracket 310.

At least a portion of the plurality of second fastening members S2 may be fastened to the nut 221 of the second side bracket 220 through the mounting bracket 300, the reinforcement bracket 310 and the middle bracket 400.

According to the above-described configuration of the present disclosure, the first battery module 100 and the second battery module 200 may be coupled, fastened or secured to the mounting bracket 300 in the left-right direction or Y axis direction. Accordingly, it may be possible to improve energy density and space efficiency of the battery pack in the up-down direction or Z axis direction.

Referring to FIGS. 5 to 9, the battery pack according to an embodiment of the present disclosure may further include the third fastening member S3 passing through the first side bracket 120 and the mounting bracket 300.

The third fastening member S3 may include a plurality of third fastening members S3. The plurality of third fastening members S3 may be arranged in the front-rear direction or X axis direction. Each of the plurality of third fastening members S3 may pass through the mounting bracket 300 and the first side bracket 120. Each of the plurality of third fastening members S3 may be coupled to the nut 121. Additionally, at least a portion of each of the plurality of third fastening member S3 may be inserted into the side plate 110 of the first battery module 100. Additionally, at least a portion of each of the plurality of third fastening members S3 may be inserted into the side plate 110 of the first battery module 100.

The plurality of third fastening members S3 may fasten, couple or secure the mounting bracket 300 and the first side bracket 120. Additionally, at least a portion of the plurality of third fastening members S3 may fasten, couple or secure the mounting bracket 300 and the first side bracket 120.

According to the above-described configuration of the present disclosure, the first battery module 100 and the second battery module 200 may be coupled, fastened or secured to the mounting bracket 300 in the left-right direction or Y axis direction. Accordingly, it may be possible to improve energy density and space efficiency of the battery pack in the up-down direction or Z axis direction.

Referring to FIGS. 5 to 9, each of the first battery module 100 and the second battery module 200 of the battery pack according to an embodiment of the present disclosure may include a plurality of cylindrical battery cells 10 extending in the up-down direction. The plurality of cylindrical battery cells 10 may extend in the direction in which the first battery module 100 and the second battery module 200 are stacked.

According to the above-described configuration of the present disclosure, the first battery module 100 and the second battery module 200 may be coupled, fastened or secured to the mounting bracket 300 in the left-right direction or Y axis direction. Accordingly, it may be possible to improve energy density and space efficiency of the battery pack in the up-down direction or Z axis direction.

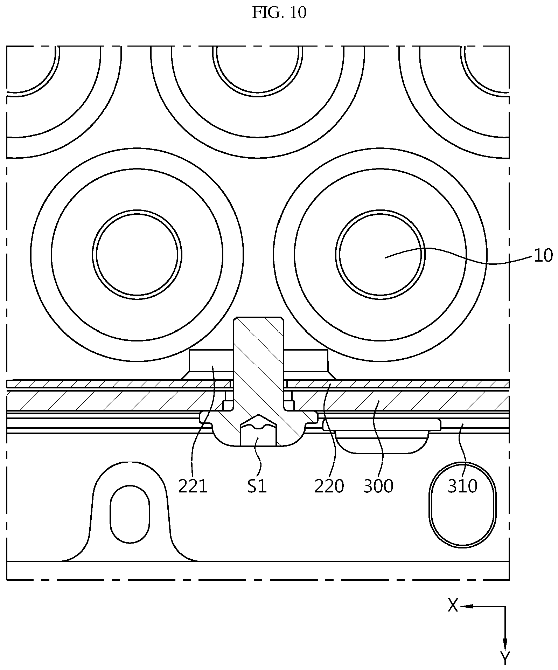

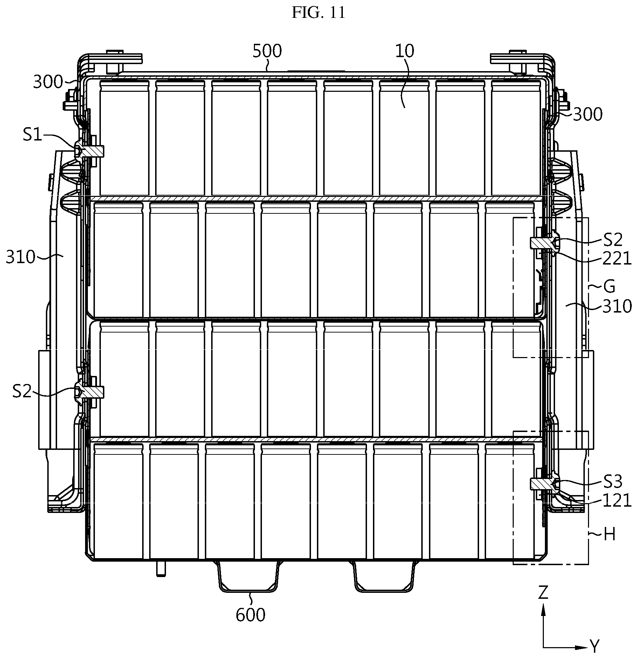

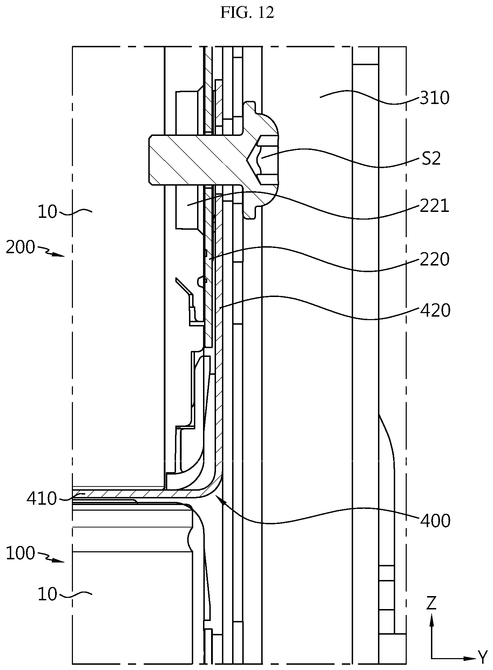

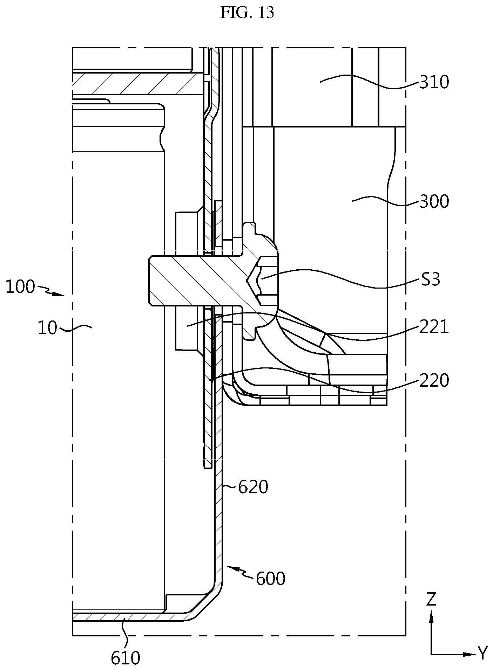

FIG. 10 is an enlarged view of section F in FIG. 9. FIG. 11 is a cross-sectional view of FIG. 1, taken along the line B-B'. FIG. 12 is an enlarged view of section G in FIG. 11. FIG. 13 is an enlarged view of section H in FIG. 11. Referring to FIGS. 10 to 13, at least a portion of each of the first fastening member S1 and the second fastening member S2 of the battery pack according to an embodiment of the present disclosure may be inserted into the second battery module 200. In this instance, the first fastening member S1 and the second fastening member S2 may be located at the space between the adjacent battery cells 10.

Additionally, at least a portion of each of the second fastening member S2 and the third fastening member S3 of the battery pack according to an embodiment of the present disclosure may be inserted into the first battery module 100. In this instance, the second fastening member S2 and the third fastening member S3 may be located at the space between the adjacent battery cells 10.

According to the above-described configuration of the present disclosure, since the first fastening member S1, the second fastening member S2 and the third fastening member S3 used to fasten the first battery module 100 to the second battery module 200 are located at the space between the adjacent battery cells 10, it may be possible to increase space efficiency. Accordingly, it may be possible to improve energy density and space efficiency of the battery pack in the up-down direction or Z axis direction.

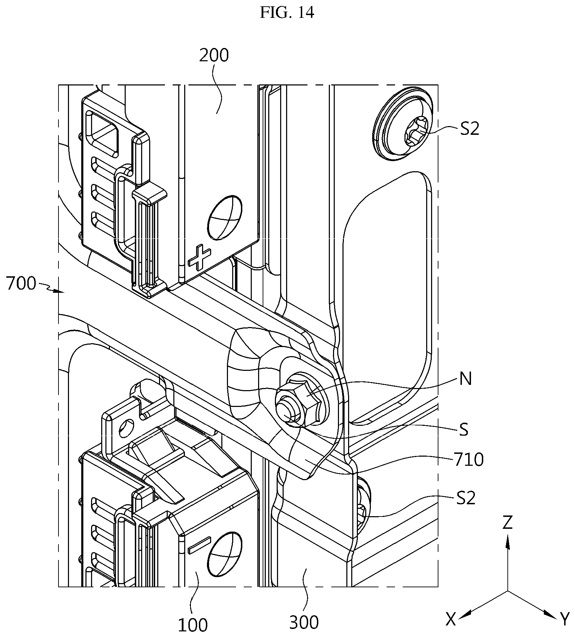

FIG. 14 is an enlarged view of section C in FIG. 1. Referring to FIGS. 1 and 14, the battery pack according to an embodiment of the present disclosure may further include the front bracket 700 covering the front surface of the first battery module 100 and the front surface of the second battery module 200, and the mounting bracket 300 may be fastened to the front bracket 700. The front bracket 700 may cover the front surface of the first battery module 100 and the front surface of the second battery module 200. The front bracket 700 may include a first fastening portion 710. The first fastening portion 710 may include a pair of first fastening portions 710. Each of the first fastening portions 710 may be fastened to the mounting bracket 300. The fastening member S and the nut N may couple, fasten or secure the first fastening portion 710 and the mounting bracket 300.

According to the above-described configuration of the present disclosure, the front bracket 700 may stably support the first battery module 100 and the second battery module 200. Accordingly, it may be possible to stably maintain the stack structure of the battery pack.

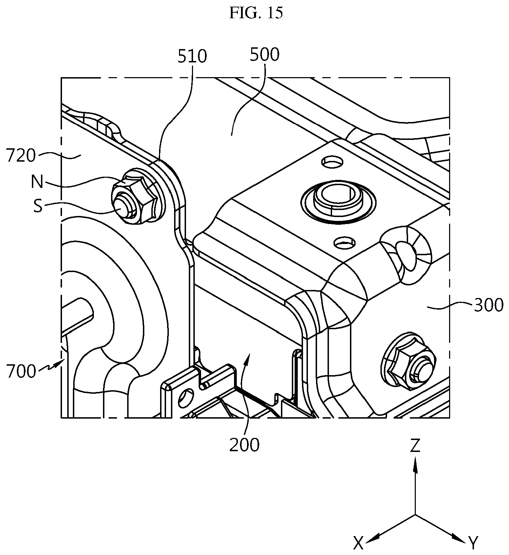

FIG. 15 is an enlarged view of section D in FIG. 1. Referring to FIGS. 1 and 15, the front bracket 700 of the battery pack according to an embodiment of the present disclosure may be fastened to the top bracket 500. The front bracket 700 may include a second fastening portion 720. The top bracket 500 may include a fastening portion 510. The second fastening portion 720 may be fastened to the fastening portion 510 of the top bracket 500. The fastening member S and the nut N may couple, fasten or secure the second fastening portion 720 and the top bracket 500.

According to the above-described configuration of the present disclosure, the front bracket 700 may stably support the first battery module 100 and the second battery module 200. Accordingly, it may be possible to stably maintain the stack structure of the battery pack.

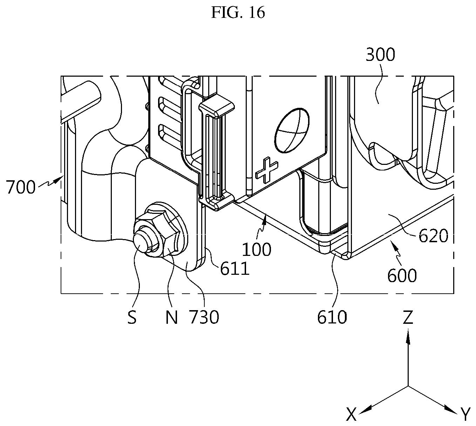

FIG. 16 is an enlarged view of section E in FIG. 1. Referring to FIGS. 1 and 16, the front bracket 700 of the battery pack according to an embodiment of the present disclosure may be fastened to the bottom bracket 600. The front bracket 700 may include a third fastening portion 730. The bottom bracket 600 may include a fastening portion 611. The third fastening portion 730 may be fastened to the fastening portion 611 of the bottom bracket 600. The fastening member S and the nut N may couple, fasten or secure the third fastening portion 730 and the bottom bracket 600.

According to the above-described configuration of the present disclosure, the front bracket 700 may stably support the first battery module 100 and the second battery module 200. Accordingly, it may be possible to stably maintain the stack structure of the battery pack.

A vehicle according to the present disclosure may include the battery pack according to the present disclosure. The battery pack according to the present disclosure may be applied to a vehicle such as an electric vehicle or a hybrid electric vehicle. Additionally, in addition to the battery pack, the vehicle according to the present disclosure may further include a variety of other components included in the vehicle. For example, in addition to the battery pack according to the present disclosure, the vehicle according to the present disclosure may further include a vehicle body, a motor, a control device such as an electronic control unit (ECU) and so on.

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims **.**

## Claims

1. A battery pack, comprising:
a first battery module (100) including a plurality of battery cells (10);
a first side bracket (120) disposed on a side plate (110) of the first battery module (100);
a second battery module (200) stacked on the first battery module (100), and including a plurality of battery cells (10);
a second side bracket (220) disposed on a side plate (210) of the second battery module (200); and
a mounting bracket (300) fastened to the first side bracket (120) and the second side bracket (220),
**characterized in that** the first side bracket (120) has a nut (121) that is secured to an inner surface, and wherein the side plate (110) of the first battery module (100) has a receiving portion (111) in which the nut is received.

2. The battery pack according to claim 1, wherein each of the first battery module (100) and the second battery module (200) includes a plurality of cylindrical battery cells (10) extending in an up-down direction.

3. The battery pack according to claim 1, wherein the first side bracket (120) is attached to the side plate (110) of the first battery module (100).

4. The battery pack according to claim 1, further comprising:
a first fastening member (S1) that is fastened to the nut (121) through the mounting bracket (300).

5. The battery pack according to claim 1, further comprising:
a middle bracket (400) between the first battery module (100) and the second battery module (200) to cover the second side bracket (220); and
a second fastening member (S2) passing through the middle bracket (400) and the mounting bracket (300).

6. The battery pack according to claim 1, further comprising:
a bottom bracket -(600) covering a lower surface of the first battery module (100) and the first side bracket (120); and
a third fastening member (S3) passing through the bottom bracket (600) and the mounting bracket (300).

7. The battery pack according to claim 1, further comprising:
a top bracket (500) covering an upper surface of the second battery module (200),
wherein the mounting bracket (300) is fastened to the top bracket (500).

8. The battery pack according to claim 1, further comprising:
a front bracket (700) covering a front surface of the first battery module (100) and a front surface of the second battery module (200), and
wherein the mounting bracket (300) is fastened to the front bracket (700).

9. A vehicle comprising the battery pack according to any one of claims 1 to 8.

## Patentansprüche

1. Batteriepack, umfassend:
ein erstes Batteriemodul (100), welches eine Mehrzahl von Batteriezellen (10) umfasst;
eine erste Seitenhalterung (120), welche an einer Seitenplatte (110) des ersten Batteriemoduls (100) angeordnet ist;
ein zweites Batteriemodul (200), welches auf dem ersten Batteriemodul (100) gestapelt ist und eine Mehrzahl von Batteriezellen (10) umfasst;
eine zweite Seitenhalterung (220), welche an einer Seitenplatte (210) des zweiten Batteriemoduls (200) angeordnet ist; und
eine Montagehalterung (300), welche an der ersten Seitenhalterung (120) und
der zweiten Seitenhalterung (220) befestigt ist,
**dadurch gekennzeichnet, dass** die erste Seitenhalterung (120) eine Mutter (121) aufweist, welche an einer Innenfläche befestigt ist, und wobei die Seitenplatte (110) des ersten Batteriemoduls (100) einen Aufnahmeabschnitt (111) aufweist, in welchem die Mutter aufgenommen ist.

2. Batteriepack nach Anspruch 1, wobei jedes von dem ersten Batteriemodul (100) und dem zweiten Batteriemodul (200) eine Mehrzahl von zylindrischen Batteriezellen (10) umfasst, welche sich in einer Oben-Unten-Richtung erstrecken.

3. Batteriepack nach Anspruch 1, wobei die erste Seitenhalterung (120) an der Seitenplatte (110) des ersten Batteriemoduls (100) angebracht ist.

4. Batteriepack nach Anspruch 1, ferner umfassend:
ein erstes Befestigungselement (S1), welches an der Mutter (121) durch die Montagehalterung (300) befestigt ist.

5. Batteriepack nach Anspruch 1, ferner umfassend:
eine Mittelhalterung (400) zwischen dem ersten Batteriemodul (100) und dem zweiten Batteriemodul (200), um die zweite Seitenhalterung (220) zu bedecken; und
ein zweites Befestigungselement (S2), welches durch die Mittelhalterung (400) und die Montagehalterung (300) verläuft.

6. Batteriepack nach Anspruch 1, ferner umfassend:
eine untere Halterung (600), welche eine untere Fläche des ersten Batteriemoduls (100) und die erste Seitenhalterung (120) bedeckt; und
ein drittes Befestigungselement (S3), welches durch die untere Halterung (600) und die Montagehalterung (300) verläuft.

7. Batteriepack nach Anspruch 1, ferner umfassend:
eine obere Halterung (500), welche eine obere Fläche des zweiten Batteriemoduls (200) bedeckt, wobei die Montagehalterung (300) an der oberen Halterung (500) befestigt ist.

8. Batteriepack nach Anspruch 1, ferner umfassend:
eine vordere Halterung (700), welche eine vordere Fläche des ersten Batteriemoduls (100) und eine vordere Fläche des zweiten Batteriemoduls (200) bedeckt, und
wobei die Montagehalterung (300) an der vorderen Halterung (700) befestigt ist.

9. Fahrzeug umfassend den Batteriepack nach einem der Ansprüche 1 bis 8.

## Revendications

1. Bloc-batterie, comprenant :
un premier module de batterie (100) incluant une pluralité de cellules de batterie (10) ;
un premier support latéral (120) disposé sur une plaque latérale (110) du premier module de batterie (100) ;
un deuxième module de batterie (200) empilé sur le premier module de batterie (100), et incluant une pluralité de cellules de batterie (10) ;
un deuxième support latéral (220) disposé sur une plaque latérale (210) du deuxième module de batterie (200) ; et
un support de montage (300) fixé au premier support latéral (120) et au deuxième support latéral (220), **caractérisé en ce que** le premier support latéral (120) comporte un écrou (121) qui est fixé à une surface interne, et dans lequel la plaque latérale (110) du premier module de batterie (100) comporte une portion réceptrice (111) dans laquelle l'écrou est reçu.

2. Bloc-batterie selon la revendication 1, dans lequel chacun du premier module de batterie (100) et du deuxième module de batterie (200) inclut une pluralité de cellules de batterie cylindriques (10) s'étendant dans une direction haut-bas.

3. Bloc-batterie selon la revendication 1, dans lequel le premier support latéral (120) est attaché à la plaque latérale (110) du premier module de batterie (100).

4. Bloc-batterie selon la revendication 1, comprenant en outre :
un premier organe de fixation (S1) qui est fixé à l'écrou (121) par l'intermédiaire du support de montage (300).

5. Bloc-batterie selon la revendication 1, comprenant en outre :
un support intermédiaire (400) entre le premier module de batterie (100) et le deuxième module de batterie (200) pour recouvrir le deuxième support latéral (220) ; et
un deuxième organe de fixation (S2) traversant le support intermédiaire (400) et le support de montage (300).

6. Bloc-batterie selon la revendication 1, comprenant en outre :
un support de dessous (600) recouvrant une surface inférieure du premier module de batterie (100) et du premier support latéral (120) ; et
un troisième organe de fixation (S3) traversant le support de dessous (600) et le support de montage (300).

7. Bloc-batterie selon la revendication 1, comprenant en outre :
un support de dessus (500) recouvrant une surface supérieure du deuxième module de batterie (200), dans lequel le support de montage (300) est fixé au support de dessus (500).

8. Bloc-batterie selon la revendication 1, comprenant en outre :
un support avant (700) recouvrant une surface avant du premier module de batterie (100) et une surface avant du deuxième module de batterie (200), et
dans lequel le support de montage (300) est fixé au support avant (700).

9. Véhicule comprenant le bloc-batterie selon l'une quelconque des revendications 1 à 8.
